# EUROPEAN PATENT APPLICATION

(11) **EP 4 729 759 A1**
(43) Date of publication of application: **22.04.2026**
(21) Application number: 25202479.9
(22) Date of filing: 16.09.2025
(51) Int. Cl.: F02C 7/22, F02C 7/232, F02C 7/262

(54) **GAS TURBINE ENGINE FUEL SUPPLY SYSTEM WITH HYDRAULIC FUEL ACCUMULATOR**

(30) Priority: 11.10.2024 US 202418912967
(71) Applicant: Honeywell International Inc., Charlotte, NC 28202 (US)
(72) Inventor: KINGERY, Barry J., Charlotte, 28202 (US); BRONSON, Tom, Charlotte, 28202 (US); CULBERTSON, Bradley, Charlotte, 28202 (US); SZETO, Kelly, Charlotte, 28202 (US)
(74) Representative: Ingrassia, Fisher & Lorenz UK Ltd.

(57) **Abstract**

A gas turbine engine fuel supply system includes a fuel manifold, at least one fuel nozzle, and a hydraulic accumulator. The fuel manifold is adapted to receive fuel supplied thereto from a fuel source. The fuel manifold and the fuel have first thermal expansion characteristics. The at least one fuel nozzle is coupled to the fuel manifold and is adapted to inject the fuel supplied to the manifold into a combustor. The hydraulic accumulator is thermally coupled to, and is in fluid communication with, the manifold. The hydraulic accumulator is configured to exhibit second thermal expansion characteristics that are substantially equivalent to the first thermal expansion characteristics.

## Description

### TECHNICAL FIELD

The present disclosure generally relates to gas turbine engines and, more particularly, to a gas turbine engine fuel supply system that includes a hydraulic fuel accumulator.

### BACKGROUND

Gas turbine engines may be used to power various types of vehicles and systems. A typical gas turbine engine includes at least a compressor, a combustor, and a turbine, and may include additional components and systems, depending on the particular end-use of the gas turbine engine. During operation of a gas turbine engine, the compressor draws in, and raises the pressure of, ambient air to a relatively high level. The compressed air from the compressor is then directed into the combustor, where a plurality of fuel nozzles, mounted on a fuel manifold, inject fuel into the combustor. The fuel/air mixture is combusted, generating high-energy gas. The high-energy gas expands through the turbine, where it gives up much of its energy and causes the turbine to rotate. The gas is then exhausted from the turbine engine.

In some applications, the need may arise for a relatively rapid start/restart of the gas turbine engine. In such instances, the fuel nozzles may include check valves, which close upon shutdown of the engine, to thereby retain fuel within the fuel line and manifold. Thus, upon the next start, the time typically spent filling up the fuel line and manifold can be eliminated. However, a challenge with this configuration can occur after shutdown, especially when the gas turbine engine is disposed within a compartment. For example, when the gas turbine engine is an auxiliary power unit (APU) disposed within an APU compartment.

Specifically, after shutdown, the temperature of the engine compartment increases during soak-back (i.e., the engine cooling-off period). During this time, the fuel in the fuel line and manifold heats up, causing it to increase in pressure. In many instances, the pressure increase is sufficient to cause the nozzle check valves to open, causing some of the fuel to flow into the combustor. This, in turn, can result in fuel vapor within the engine compartment, which can be deposited as fuel residue on components within the gas turbine engine. This residue can eventually cause soft foreign object damage (FOD) and various other issues.

Hence, there is a need for a system and method that alleviates pressurization of the fuel system during engine soak-back, and that does not rely on a system that relieves the fuel to an overboard drain, which is an environmental concern, nor a purge system, which can add significant weight and cost and can adversely impact engine start time. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a gas turbine engine fuel supply system includes a fuel manifold, at least one fuel nozzle, and a hydraulic accumulator. The fuel manifold is adapted to receive fuel supplied thereto from a fuel source. The fuel manifold and the fuel have first thermal expansion characteristics. The at least one fuel nozzle is coupled to the fuel manifold and is adapted to inject the fuel supplied to the manifold into a combustor. The hydraulic accumulator is thermally coupled to, and is in fluid communication with, the manifold. The hydraulic accumulator is configured to exhibit second thermal expansion characteristics that are substantially equivalent to the first thermal expansion characteristics.

In another embodiment, a gas turbine engine system includes a fuel source and a gas turbine engine. The fuel source is operable to supply fuel. The gas turbine engine includes at least a compressor, a combustor, and a turbine, and further includes a fuel manifold, at least one fuel nozzle, and a hydraulic accumulator. The fuel manifold is in fluid communication with the fuel source to receive the fuel supplied thereby. The fuel manifold and the fuel have first thermal expansion characteristics. The at least one fuel nozzle is coupled to the fuel manifold and is adapted to inject the fuel supplied to the manifold into the combustor. The hydraulic accumulator is thermally coupled to, and in fluid communication with, the manifold. The hydraulic accumulator is configured to exhibit second thermal expansion characteristics that are substantially equivalent to the first thermal expansion characteristics.

In yet another embodiment, a hydraulic accumulator includes a main body, a separator wall, a first piston, a spring, a second piston, and an expansion fluid. The main body includes an outer surface and an inner surface. The outer surface is adapted to be thermally coupled to a gas turbine engine fuel manifold, and the inner surface defines a main cavity. The separator wall extends radially inwardly from the inner surface into the main cavity, thereby separating the main cavity into a first piston chamber and a second piston chamber. The first piston is disposed in the first piston chamber and divides the first piston chamber into a spring chamber and a fuel chamber. The first piston is movable within the first piston chamber between a first position, in which the fuel chamber has a first fluid volume, and a plurality of second positions, in which the fuel chamber has a second fluid volume that is greater than the first fluid volume. The spring is disposed within the spring chamber and contacts the first piston and the inner surface of the main body. The spring supplies a spring force to the first piston that urges the first piston toward the first position. The second piston is disposed within the second piston chamber and divides the second piston chamber into a vent chamber and an expansion fluid chamber. The second piston is movable within the second piston chamber to a plurality of second piston positions. The expansion fluid is disposed within the expansion fluid chamber and contacts the second piston. The expansion fluid is configured to expand and contract in response to variations in temperature thereof, to thereby move the second piston to the plurality of second piston positions. Thus, when the fuel supplied to the fuel manifold is at a fluid pressure of a least a predetermined magnitude, the fuel applies a fluid force to the first piston to thereby (i) move the first piston to at least one of the plurality of second positions and (ii) allow additional fuel to flow into the fuel chamber.

Furthermore, other desirable features and characteristics of the fuel system and hydraulic accumulator will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a simplified cross section view of one example embodiment of a gas turbine engine;
FIG. 2 depicts a simplified schematic representation of one embodiment of a fuels supply system that may be used to supply fuel to the gas turbine engine of FIG. 1;
FIG. 3 depicts a simplified cross section view of one embodiment of a hydraulic accumulator that may be included in the fuel supply system of FIG. 2;
FIG. 4 depicts the configuration of the hydraulic accumulator of FIG. 3 during operation of the gas turbine engine of FIG. 1;
FIG. 5 depicts the configuration of the hydraulic accumulator of FIG. 3 immediately after shut down of the gas turbine engine of FIG. 1; and
FIG. 6 depicts the configuration of the hydraulic accumulator of FIG. 3 during the soak-back period following the shut down of the gas turbine engine of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

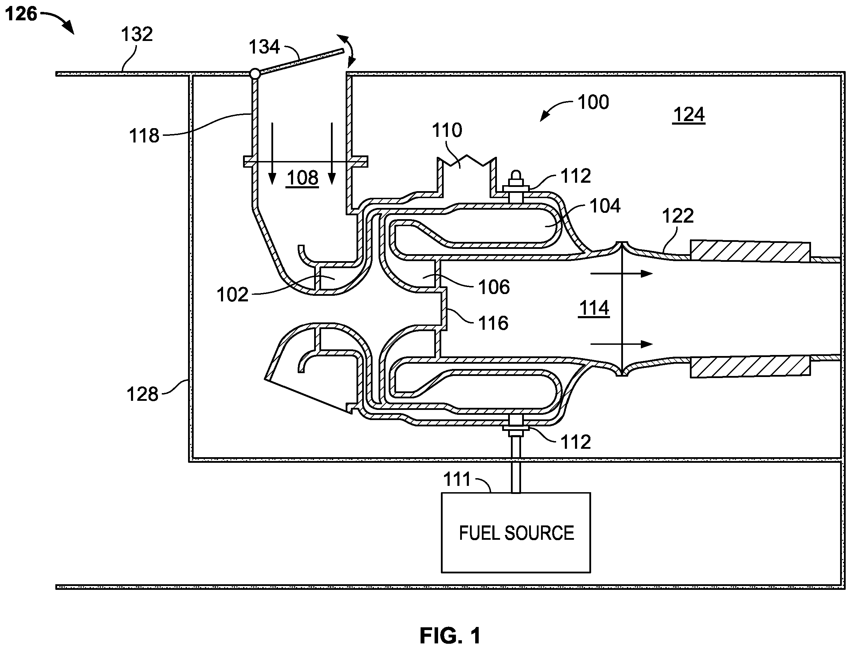

Turning first to FIG. 1, a simplified cross section view of an exemplary embodiment of a gas turbine engine 100 is depicted. The depicted gas turbine engine 100 is configured as an APU and includes a compressor 102, a combustor 104, and a turbine 106. Air is directed into the compressor 102 via an air inlet 108, which is coupled to an inlet duct 118. The compressor 102 raises the pressure of the air and supplies compressed air to both the combustor 104 and, in the depicted embodiment, to a bleed air outlet port 110. Before proceeding further, it should be noted that the gas turbine engine 100, while described herein for convenience as being configured as an APU, may also be configured for implementation if various other contexts (e.g., for propulsion).

In the combustor 104, the compressed air is mixed with fuel that is supplied to the combustor 104 from a fuel source 111 via a plurality of fuel nozzles 112 (only one shown). The combustor 104 may be implemented as any one of numerous types of combustors now known or developed in the future. Non-limiting examples of presently known combustors include various can-type combustors, various reverse-flow combustors, and various through-flow combustors. No matter the combustor configuration 104 used, the fuel/air mixture is combusted, generating high-energy gas, which is then directed into the turbine 106.

The high-energy gas expands through the turbine 106, where it gives up much of its energy and causes the turbine 106 to rotate. The gas is then exhausted from the APU 100 via an exhaust gas outlet 114, which is coupled to an outlet duct 122. As the turbine 106 rotates, it drives, via a turbine shaft 116, various types of equipment that may be mounted in, or coupled to, the APU 100. For example, in the depicted embodiment the turbine 106 drives the compressor 102. It will be appreciated that the turbine 106 may also be used to drive a generator and/or a load compressor and/or other rotational equipment, which are not shown in FIG. 1 for ease of illustration. It will additionally be appreciated that the turbine 106 may be implemented using any one of numerous types of turbines now known or developed in the future including, for example, a vaned radial turbine, a vaneless radial turbine, and a vaned axial turbine.

When configured as an APU, and as FIG. 1 also depicts, the gas turbine engine 100 is typically positioned in a compartment 124 that is located in the aft fuselage of the aircraft 126. The compartment 124 may be separated from the rest of the fuselage by a firewall 128, and a skin or exterior surfaces 132 of the aircraft 126 form the remaining walls of the compartment 124. In depicted embodiment, compartment 124 includes an inlet door assembly 134 that is configured to open and close to thereby enable or disable, respectively, airflow into the air inlet 108.

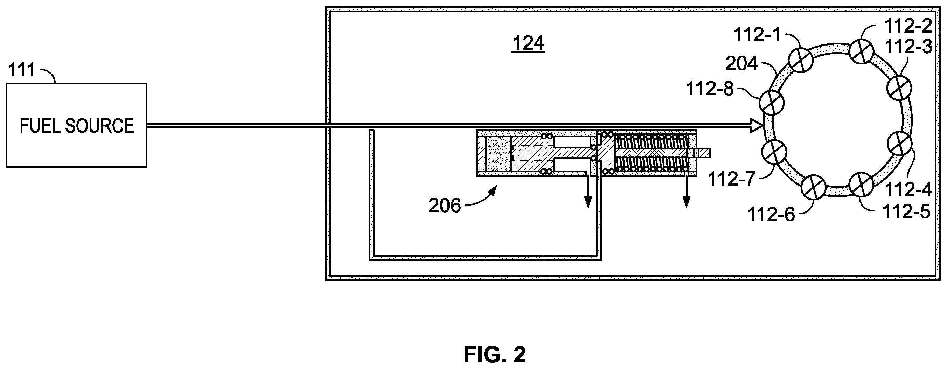

As noted above, fuel is supplied from a fuel source 111 to the combustor 104 via a plurality of fuel nozzles 112. More specifically, and as shown more clearly in FIG. 2, the fuel source 111 supplies fuel, via I to the plurality of fuel nozzles 112 (e.g., 112-1, 112-2, 112-3 ... 112-N) via a fuel manifold 204. It should be noted that although eight fuel nozzles 112 are depicted in FIG. 2, the gas turbine engine 100 could be implemented with more or less than this number of fuel nozzles 112. Regardless of the number of fuel nozzles 112, it is noted that the fuel nozzles 112 each include a non-illustrated check valve that closes upon shutdown of the gas turbine engine 100, to thereby retain fuel in the fuel manifold 204.

As is generally known, after the gas turbine engine 100 is shutdown, the temperature of the compartment 124 increases, which causes the fuel in the fuel manifold 204 to also heat up and increase in pressure and volume. The increase in pressure and volume is dependent upon the thermal expansion characteristics of the fuel and the fuel manifold 204 and, if left unchecked, could increase sufficiently to open the nozzle check valves and spill fuel into the combustor 104. However, as FIG. 2 further depicts, to alleviate this undesired result, the gas turbine engine 100 additionally includes a hydraulic accumulator 206. The hydraulic accumulator 206 is thermally coupled to, and is in fluid communication with, the fuel manifold 204, and is configured to exhibit thermal expansion characteristics that are substantially equivalent to the thermal expansion characteristics of the fuel and the fuel manifold 204.

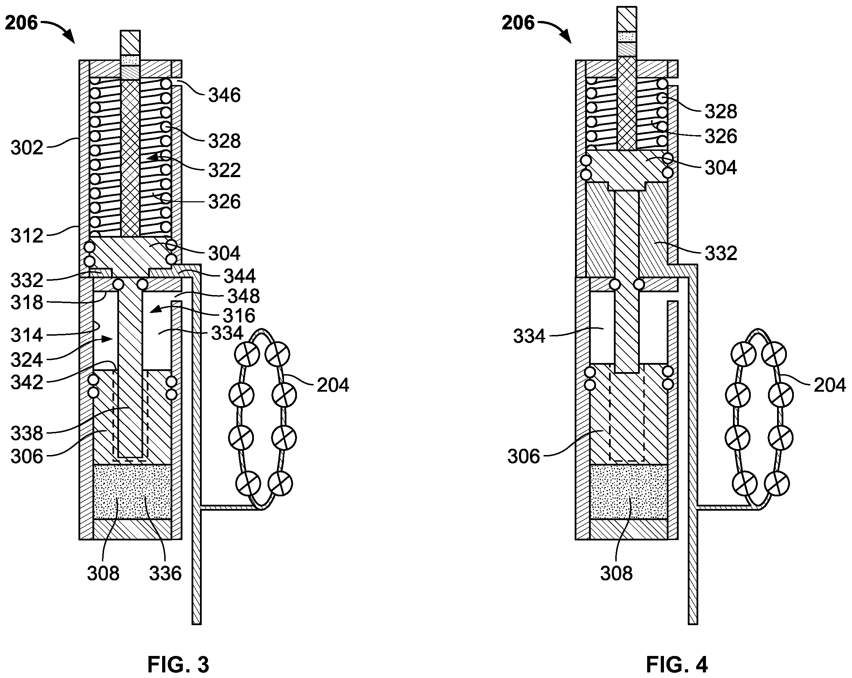

To implement its functionality, and as shown more clearly in FIGS. 3-6, the hydraulic accumulator 206 includes a main body 302, a first piston 304, a second piston 306, and an expansion fluid 308. The main body 302 includes an outer surface 312 and an inner surface 314. The outer surface 312 is thermally coupled to the fuel manifold 204 (see FIG. 2) and the inner surface 314 defines a main cavity 316. In addition, a separator wall 318 extends radially inwardly from the inner surface 314 into the main cavity 316, thereby separating the main cavity 316 into a first piston chamber 322 and a second piston chamber 324.

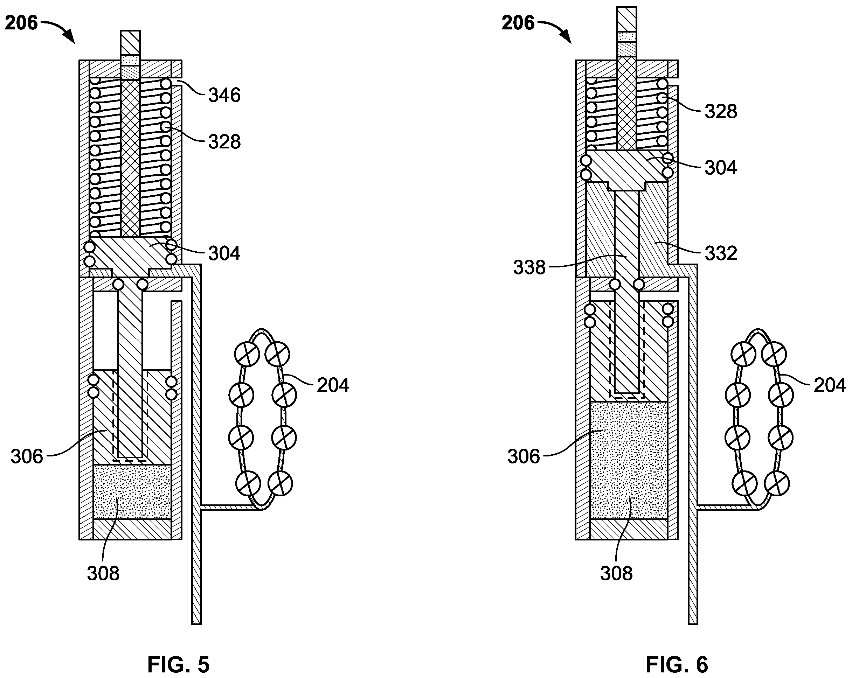

The first piston 304 is disposed in the first piston chamber 322 and divides the first piston chamber 322 into a spring chamber 326, within which a spring 328 may be disposed, and a fuel chamber 332. The first piston 304 is also movable within the first piston chamber 322 between a first position, which is the position depicted in FIGS. 3 and 5, and a plurality of second positions, two of which are depicted in FIGS. 4 and 6. As FIGS. 3 and 5 depict, in the first position, the fuel chamber 332 has a first fluid volume, and, as FIGS. 4 and 6 depict, in any one of the second positions, the fuel chamber 332 has a second fluid volume that is greater than the first fluid volume.

The spring 328, when included, contacts the first piston 304 and the inner surface 314 of the main body 302 and supplies a spring force to the first piston 304 that urges the first piston 304 toward the first position. As may be appreciated, when a force of at least a predetermined magnitude (e.g., a magnitude sufficient to overcome the spring force) is applied to the first piston 304, it moves to at least one of the plurality of second positions and allows additional fuel to flow into the fuel chamber 332 (see FIGS. 4 and 6).

The second piston 306 is disposed within the second piston chamber 324 and divides the second piston chamber 324 into a vent chamber 334 and an expansion fluid chamber 336. The second piston 306, as FIGS. 3-6 depict, is movable within the second piston chamber 324 to a plurality of second piston positions. In some embodiments, the second piston 306 may be coupled to the first piston 304 via a piston rod 338 that extends through the separator wall 318 and into the vent chamber 334 (see, for example, FIG. 2). In other embodiments, such as the one depicted in FIGS. 3-6, the piston rod 338 is coupled to only the first piston 304 and, in addition to extending through the separator wall 318 and into the vent chamber 334, it also extends into a piston rod cavity 342 that is formed in the second piston 306. With this latter configuration, the second piston 306, in response to expansion and contraction of the expansion fluid 308, only selectively applies a drive force to the first piston 304 to assist a fluid force supplied to the first piston 304 by the fuel.

The expansion fluid 308 is disposed within the expansion fluid chamber 336 and contacts the second piston 306. The expansion fluid is configured to expand and contract in response to variations in temperature, to thereby move the second piston 306 to any of the plurality of second piston positions. It will be appreciated that the expansion fluid 308 may be any one of numerous known fluids that, together with the other components that comprise the hydraulic accumulator 206, will result in the hydraulic accumulator 206 exhibiting thermal expansion characteristics that are substantially equivalent to the thermal expansion characteristics of the fuel and the fuel manifold 204. Some non-limiting examples of suitable expansion fluids include various calibration fluids, such as MIL-PRF-7024 Type II, a sustainable aviation fuel, such as a HEFA fuel, and various man-made organic solvents, such as a Stoddard solvent.

In addition to the above, and as FIGS. 2-6 make evident, the main body 302 is preferably configured to additionally include a plurality of openings. More specifically, the main body 302 additionally includes a fuel line opening 344, a spring chamber opening 346, and a vent chamber opening 348. The fuel line opening 344 extends between the inner surface and the outer surface and is in fluid communication the fuel manifold 204. The fuel line opening 344 is also selectively in fluid communication with the first piston chamber, depending on the position of the first piston 304.

The spring chamber opening 346 extends between the inner surface 314 and the outer surface 312 and fluidly communicates the spring chamber 326 with a non-illustrated drain mast or the ambient environment surrounding the main body. The vent chamber opening 348 also extends between the inner surface 314 and the outer surface 312. The vent chamber opening 348 fluidly communicates the vent chamber 334 with the non-illustrated drain mast or the ambient environment surrounding the main body.

Having described the structure of the hydraulic accumulator 206, and the functionality of its various components, the overall function of the hydraulic accumulator 206 at various stages of operation of the gas turbine engine 100 will now be provided. Referring first to FIG. 3, the depicted configuration of the hydraulic accumulator 206 is for when the gas turbine engine 100 is in a cold, non-operating state. As shown, the first piston 304 is in the first position, due to the spring force supplied thereto by the spring 328.

Turning to FIG. 4, the depicted configuration of the hydraulic accumulator 206 is for when the engine is in a normal operating state. Here, fuel supplied to the fuel manifold 204 is at a pressure sufficient to overcome the force supplied from the spring 328, thus causing the first piston 304 to move to a second position and allowing additional fuel to flow into the fuel chamber 332. Because the temperature of the fuel and the temperature within the compartment 124 has not changed significantly from when the gas turbine engine 100 was in the cold, non-operating state, the expansion fluid 308 volume has not changed significantly. This means the position of the second piston 306 has also not changed significantly.

Immediately after the gas turbine engine 100 is shut down, and as FIG. 5 depicts, the hydraulic accumulator 206 returns to the configuration shown in FIG. 2. This is because the temperature of the fuel and the temperature within the compartment 124 does not change significantly immediately after shutdown, and because the fuel supplied to the fuel manifold 204 is at a pressure sufficient to overcome the force supplied from the spring 328. However, as was previously noted, not long after the gas turbine engine 100 is shut down, the temperature of the compartment 124 begins to increase, which causes the fuel in the fuel manifold 204 to also heat up and increase in pressure and volume. Because the hydraulic accumulator 206 is thermally coupled to, and is in fluid communication with, the fuel manifold 204, the expansion fluid 308 also heats up and increases in volume. In doing so, and as FIG. 6 shows, the expansion fluid 308 supplies a force to the second piston 306, causing it to move and engage the piston rod 338, and thereby apply a drive force to the first piston 304 to assist any fluid force supplied to the first piston 304 by the fuel.

The hydraulic accumulator described herein uses a thermally expanding fluid (e.g., expansion fluid 308) to hydraulically move the second piston 306, thereby accommodating the thermally expanded volume of fuel from the fuel manifold 204. Furthermore, the configuration of the hydraulic accumulator eliminates sensitivities to variations in spring stiffness and seal friction, which can be significant factors when dealing with the low crack pressures of atomizer check valves.

The approach utilizes the incompressible effects of the expansion fluid 308 to continuously move the second piston 306 in response to changes in fuel temperature during the thermal soak-back process. The volume change of the expansion fluid 308 matches or exceeds that of the fuel manifold volume, thus maintaining manifold pressure at or below the check valve crack pressure as fuel temperature increases due to thermal soak-back.

As used herein, the term "substantially" denotes within 5% to account for manufacturing tolerances and material characteristic variabilities.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A gas turbine engine fuel supply system, comprising:
a fuel manifold adapted to receive fuel supplied thereto from a fuel source, the fuel manifold and fuel having first thermal expansion characteristics;
at least one fuel nozzle coupled to the fuel manifold, the at least one fuel nozzle adapted to inject the fuel supplied to the manifold into a combustor; and
a hydraulic accumulator thermally coupled to, and in fluid communication with, the manifold, the hydraulic accumulator configured to exhibit second thermal expansion characteristics, the second thermal expansion characteristics substantially equivalent to the first thermal expansion characteristics.

2. The system of claim 1, wherein the hydraulic accumulator comprises:
a main body including an outer surface and an inner surface, the outer surface thermally coupled to the fuel manifold, the inner surface defining main cavity;
a separator wall extending radially inwardly from the inner surface into the main cavity, thereby separating the main cavity into a first piston chamber and a second piston chamber;
a first piston disposed in the first piston chamber and dividing the first piston chamber into a spring chamber and a fuel chamber, the first piston movable within the first piston chamber between a first position, in which the fuel chamber has a first fluid volume, and a plurality of second positions, in which the fuel chamber has a second fluid volume;
a second piston disposed within the second piston chamber and dividing the second piston chamber into a vent chamber and an expansion fluid chamber, the second piston movable within the second piston chamber to a plurality of second piston positions; and
an expansion fluid disposed within the expansion fluid chamber and contacting the second piston, the expansion fluid configured to expand and contract in response to variations in temperature thereof, to thereby move the second piston to the plurality of second piston positions.

3. The system of claim 2, wherein:
when the fuel supplied to the fuel manifold is at a fluid pressure of a least a predetermined magnitude, the fuel applies a fluid force to the first piston to thereby (i) move the first piston to at least one of the plurality of second positions and (ii) allow additional fuel to flow into the fuel chamber.

4. The system of claim 3, wherein the second piston, in response to expansion and contraction of the expansion fluid, at least selectively applies a drive force to the first piston to thereby assist the fluid force.

5. The system of claim 4, wherein the hydraulic accumulator further comprises:
a piston rod cavity formed in the second piston; and
a piston rod coupled to the first piston, the piston rod extending through the separator wall, into the vent chamber, and into the piston rod cavity.

6. The system of claim 2, wherein the hydraulic accumulator further comprises:
a spring disposed within the spring chamber and contacting the first piston and the inner surface of the main body, the spring supplying a spring force to the first piston that urges the first piston toward the first position.

7. The system of claim 2, wherein the main body further includes:
a fuel line opening extending between the inner surface and the outer surface, the fuel line opening in fluid communication the fuel manifold and selectively in fluid communication with the first piston chamber;
a spring chamber vent opening extending between the inner surface and the outer surface, the spring chamber vent opening fluidly communicating the spring chamber with an ambient environment surrounding the main body; and
a vent chamber vent opening extending between the inner surface and the outer surface, the vent chamber vent opening fluidly communicating the vent chamber with the ambient environment surrounding the main body.

8. A gas turbine engine system, comprising:
a fuel source operable to supply fuel; and
a gas turbine engine including at least a compressor, a combustor, and a turbine, and further including:
a fuel manifold in fluid communication with the fuel source to receive the fuel supplied thereby, the fuel manifold having first thermal expansion characteristics;
at least one fuel nozzle coupled to the fuel manifold, the at least one fuel nozzle adapted to inject the fuel supplied to the manifold into the combustor; and
a hydraulic accumulator thermally coupled to, and in fluid communication with, the manifold, the hydraulic accumulator configured to exhibit second thermal expansion characteristics, the second thermal expansion characteristics substantially equivalent to the first thermal expansion characteristics.

9. The system of claim 1, wherein the hydraulic accumulator comprises:
a main body including an outer surface and an inner surface, the outer surface thermally coupled to the fuel manifold, the inner surface defining main cavity;
a separator wall extending radially inwardly from the inner surface into the main cavity, thereby separating the main cavity into a first piston chamber and a second piston chamber;
a first piston disposed in the first piston chamber and dividing the first piston chamber into a spring chamber and a fuel chamber, the first piston movable within the first piston chamber between a first position, in which the fuel chamber has a first fluid volume, and a plurality of second positions, in which the fuel chamber has a second fluid volume;
a second piston disposed within the second piston chamber and dividing the second piston chamber into a vent chamber and an expansion fluid chamber, the second piston movable within the second piston chamber to a plurality of second piston positions; and
an expansion fluid disposed within the expansion fluid chamber and contacting the second piston, the expansion fluid configured to expand and contract in response to variations in temperature thereof, to thereby move the second piston to the plurality of second piston positions.

10. The system of claim 9, wherein:
when the fuel supplied to the fuel manifold is at a fluid pressure of a least a predetermined magnitude, the fuel applies a fluid force to the first piston to thereby (i) move the first piston to at least one of the plurality of second positions and (ii) allow additional fuel to flow into the fuel chamber.

11. The system of claim 10, wherein the second piston, in response to expansion and contraction of the expansion fluid, at least selectively applies a drive force to the first piston to thereby assist the fluid force.

12. The system of claim 11, wherein the hydraulic accumulator further comprises:
a piston rod cavity formed in the second piston; and
a piston rod coupled to the first piston, the piston rod extending through the separator wall, into the vent chamber, and into the piston rod cavity.

13. The system of claim 9, wherein the hydraulic accumulator further comprises:
a spring disposed within the spring chamber and contacting the first piston and the inner surface of the main body, the spring supplying a spring force to the first piston that urges the first piston toward the first position.

14. The system of claim 9, wherein the main body further includes:
a fuel line opening extending between the inner surface and the outer surface, the fuel line opening in fluid communication the fuel manifold and selectively in fluid communication with the first piston chamber;
a spring chamber vent opening extending between the inner surface and the outer surface, the spring chamber vent opening fluidly communicating the spring chamber with an ambient environment surrounding the main body; and
a vent chamber vent opening extending between the inner surface and the outer surface, the vent chamber vent opening fluidly communicating the vent chamber with the ambient environment surrounding the main body.
